# EUROPÄISCHE PATENTANMELDUNG

(11) **EP 2 480 019 A1**
(43) Veröffentlichungstag der Anmeldung: **25.07.2012**
(21) Anmeldenummer: 11151318.0
(22) Anmeldetag: 18.01.2011
(51) Int. Cl.: H04W 12/08, H04L 29/08, H04L 29/06, H04W 88/08

(54) **Bereitstellen eines vorbestimmten Inhalts über ein offenes Funknetz**

(71) Anmelder: Iniwan GmbH, 82194 Gröbenzell (DE)
(72) Erfinder: Götz, Torsten, 82194, Gröbenzell (DE)
(74) Vertreter: Molnia, David

(57) **Zusammenfassung**

Im Allgemeinen betrifft die Erfindung Verfahren, eine Vorrichtung (beispielsweise eine Funkzugangseinheit) und ein System zum Bereitstellen eines vorbestimmten Inhalts (420), insbesondere aus dem Internet (400), über ein offenes Funknetz (100). Ein derartiges offenes Funknetz ist geeignet dafür, dass jedermann - ohne Authentifizierung mit Benutzerkennung und Passwort - sich mit einem geeigneten mobilen Kommunikationsgerät verbinden und auf Inhalte zugreifen kann, wobei allerdings nur Zugriffe auf vorbestimmte Inhalte erlaubt werden.

## Beschreibung

### Gebiet der Erfindung

Im Allgemeinen betrifft die Erfindung Verfahren, eine Vorrichtung (beispielsweise eine Funkzugangseinheit) und ein System zum Bereitstellen eines vorbestimmten Inhalts, insbesondere aus dem Internet, über ein offenes Funknetz. Ein derartiges offenes Funknetz ist geeignet dafür, dass jedermann - ohne Authentifizierung mit Benutzerkennung und Passwort - sich mit einem geeigneten mobilen Kommunikationsgerät verbinden und auf Inhalte zugreifen kann, wobei allerdings nur Zugriffe auf vorbestimmte Inhalte erlaubt werden.

### Beschreibung des Stands der Technik

Funknetze sind aus dem Stand der Technik bekannt. Gemäß dem 802.11 Standard des IEEE (Institut for Electronic and Electrical Engineers) umfasst ein derartiges Funknetz zumindest eine Funkzugangseinheit, die auch als Base Station bezeichnet wird. Die Funkzugangseinheit sendet in einstellbaren Intervallen (üblicherweise zehnmal pro Sekunde) kleine Datenpakete, sogenannte "Beacons" an alle mobile Kommunikationsgeräte (wie zum Beispiel Notebooks, Smartphones, TabletPCs und PDAs) im Empfangsbereich, der auch als Zelle bezeichnet wird. Die Beacons weisen einen Netzwerknamen, eine Liste unterstützter Übertragungsraten und die Art der Verschlüsselung auf.

Die Beacons können durch geeignete mobile Kommunikationsgeräte empfangen werden, wobei die durch die Beacons umfasste Information den mobilen Kommunikationsgeräten in der Zelle ermöglicht, eine Verbindung mit der jeweiligen Funkzugangseinheit herzustellen. Zwar fordern verschlüsselte Funknetze in einem Authentifizierungsprozess von den mobilen Kommunikationsgeräten eine gültige Kombination einer Benutzerkennung mit einem zu der Benutzerkennung korrespondierenden Passwort. Handelt es sich allerdings bei dem Funknetz um ein offenes Funknetz, dann müssen die mobilen Kommunikationsgeräte sich nicht derartig mit Benutzerkennung und Kennwort authentifizieren, um eine Verbindung mit dem offenen Funknetz herzustellen.

Sobald eine Verbindung zwischen einem mobilen Kommunikationsgerät und dem Funknetz hergestellt ist, können Daten zwischen den beiden Vorrichtungen ausgetauscht werden. Häufig ist die Funkzugangseinheit des Funknetzes über einen Router mit dem Internet verbunden. Auf diese Weise erhält der Benutzer des mobilen Kommunikationsgeräts Zugriff auf Inhalten aus dem Internet. Dies kann jedoch gerade bei offenen Funknetzen zu Missbrauch und Problemen führen. Dadurch, dass sich die mobilen Kommunikationsgeräte bzw. der Benutzer eines mobilen Kommunikationsgeräts bei offenen Funknetzen nicht mit Benutzerkennung und Kennwort Authentifizieren muss, bleibt der Benutzer anonym und kann somit unerkannt jegliche Inhalte im Internet abrufen oder zur Verfügung stellen. Verstößt der Benutzer dabei gegen das Gesetz, so hat unter Umständen derjenige den Gesetzesverstoß zu vertreten bzw. zu verantworten, der das offene Funknetz bereitgestellt hat.

Die vorliegende Erfindung löst dieses und weitere technische Probleme, die in einem derartigen offenen Funknetzen auftreten und sicherlich auch in anderen Umgebungen und Anwendungen auftreten können.

### Beschreibung der Erfindung

Im Allgemeinen stellt die vorliegende Erfindung Verfahren, eine Vorrichtung (beispielsweise eine Funkzugangseinheit) und ein System bereit, die geeignet sind, einem mobilen Kommunikationsgerät über ein offenes Funknetz Zugang zu vorbestimmten Inhalten zu gewähren.

In einem ersten Aspekt betrifft die Erfindung eine Vorrichtung zum Bereitstellen eines vorbestimmten Inhalts über ein offenes Funknetz, aufweisend: eine erste Kommunikationseinrichtung zum Herstellen einer drahtlosen Verbindung mit einem mobilen oder mehreren mobilen Kommunikationsgeräten; eine zweite Kommunikationseinrichtung zum Herstellen einer Verbindung mit einem oder mehreren Zielnetzen, insbesondere dem Internet; eine Speichereinrichtung zum Speichern von vorbestimmten Zugangsverweisen; und eine Filtereinheit, die geeignet ist: zum Vergleichen eines Zugangsverweises einer Inhaltsanfrage eines mobilen Kommunikationsgeräts mit den vorbestimmten Zugangsverweisen; zum Erlauben und Weiterleiten der Inhaltsanfrage; und zum Zurückweisen der Inhaltsanfrage, wobei die Filtereinheit die Inhaltsanfrage erlaubt und weiterleitet, wenn der Zugangsverweis mit einem der vorbestimmten Zugangsverweise übereinstimmt, und wobei die Filtereinheit die Inhaltsanfrage zurückweist, wenn der Zugangsverweis nicht mit einem der vorbestimmten Zugangsverweise übereinstimmt.

Vorzugsweise führt der Zugangsverweis der Inhaltsanfrage zu einem Inhalt aus dem Zielnetz und/oder zu einem Inhalt, der auf der Speichereinrichtung gespeichert ist. Dazu kann die Speichereinrichtung zum Speichern von Inhalten geeignet sein.

Vorzugsweise ist die zweite Kommunikationseinrichtung zum Herstellen einer Verbindung mit einem oder mehreren Zielnetzen über einen Router geeignet. Die zweite Kommunikationseinrichtung kann eine Netzwerkkarte und/oder eine WLAN-Karte und/oder eine UMTS- und/oder GPRS-Einrichtung sein.

Vorzugsweise weist die Vorrichtung weiterhin eine dritte Kommunikationseinrichtung auf, wobei die dritte Kommunikationseinrichtung ebenfalls zum Herstellen einer Verbindung mit dem einen oder mehreren Zielnetzen geeignet ist, und wobei die dritte Kommunikationseinrichtung insbesondere eine drahtlose Kommunikationseinrichtung (beispielsweise eine UMTS- und/oder GPRS-Einrichtung) ist. Dies weist den Vorteil auf, dass bei einem Ausfall der zweiten Kommunikationseinrichtung bzw. des Routers die dritte Kommunikationseinrichtung die Funktion der zweiten Kommunikationseinrichtung übernehmen kann.

Vorzugsweise weist die Vorrichtung weiterhin eine Protokolleinheit auf, wobei die Protokolleinheit geeignet ist: zum Protokollieren von Verbindungsinformationen bezüglich der drahtlosen Verbindung, wobei die Verbindungsinformationen insbesondere mindestens eine der folgenden Informationen aufweist: Informationen bezüglich der MAC-Adresse, des Betriebssystems, des Gerätetyps und der Spracheinstellung des verbundenen mobilen Kommunikationsgeräts, sowie Informationen bezüglich des Verbindungszeitpunkts, der Verbindungsdauer und der während der Verbindung übertragenen Datenmenge; und/oder zum Protokollieren von Zugriffsinformationen bezüglich der Inhaltsanfrage, wobei die Zugriffsinformationen insbesondere mindestens einer der folgenden Informationen aufweist: Informationen bezüglich der MAC-Adresse, des Betriebssystems, des Gerätetyps und der Spracheinstellung des inhaltsanfrage-stellenden mobilen Kommunikationsgeräts, sowie Informationen bezüglich des Zugangsverweises, des Zeitpunkts und der Dauer der Inhaltsanfrage, sowie Informationen bezüglich der als Resultat der Inhaltsanfrage übertragenen Daten und/oder Datenmenge.

Vorzugsweise weist die Vorrichtung weiterhin eine Protokolleinheit mit einer Mustererkennung auf, wobei die Mustererkennung zur Erkennung eines vorbestimmten Musters in einem Datenstrom, der aus der Inhaltsanfrage resultiert, geeignet ist, und wobei die Protokolleinheit zum Protokollieren von Musterinformationen bezüglicher der Inhaltsanfrage geeignet ist, wobei die Musterinformationen eine Angabe, ob in dem Datenstrom ein vorbestimmtes Muster vorliegt, aufweist.

Unter dem Protokollieren von Informationen der Protokolleinheit wird vorliegend verstanden, dass die Protokolleinheit Informationen, beispielsweise bei jeder Verbindung, jedem Datenstrom bzw. jeder Inhaltsanfrage, bestimmt und speichert. Vorzugsweise speichert die Protokolleinheit die bestimmten Informationen in geeigneten Datenbanken auf der Speichereinrichtung der Vorrichtung. So könnte die Speichereinrichtung eine Verbindungsdatenbank, eine Zugriffsdatenbank und eine Datenstromdatenbank aufweisen.

Vorzugsweise sind Verbindungsinformationen und/oder Zugriffsinformationen und/oder Musterinformationen Protokollinformationen. Alternativ kann zumindest ein Teil der Protokollinformationen oder alle Protokollinformationen oder keine Protokollinformationen auf der Speichereinrichtung gespeichert werden.

Vorzugsweise ist die zweite Kommunikationseinrichtung zum Empfangen einer eingehenden Nachricht aus dem Zielnetz geeignet, wobei die Vorrichtung weiterhin aufweist: eine Nachrichtenauswerteeinheit zum Identifizieren des Typs der empfangenen eingehenden Nachricht und zum Ausführen einer Operation abhängig von dem identifizierten Typ der empfangenen eingehenden Nachricht. Beispielsweise besteht die Operation in der Aktualisierung der Speichereinrichtung (vorbestimmte Zugangsverweise, Startseite(n) etc.) bei Aktualisierungsnachrichten und in dem Ausführen von Anweisungen (Neustart, Herunterfahren etc.) bei Anweisungsnachrichten.

Vorzugsweise ist die zweite Kommunikationseinrichtung zum Empfangen einer eingehenden Nachricht aus dem Zielnetz geeignet, wobei die Vorrichtung weiterhin aufweist: eine Nachrichtenauswerteeinheit zum Ausführen einer Aktualisierung der in der Speichereinheit gespeicherten unbestimmten Zugangsverweise basierend auf der eingehenden Nachricht.

Vorzugsweise ist die zweite Kommunikationseinrichtung zum Senden einer ausgehenden Nachricht in das Zielnetz geeignet, wobei die Vorrichtung eine Protokollsendeeinheit aufweist, die zum Verschicken von Protokollinformationen über die zweite Kommunikationseinrichtung als eine oder mehrere ausgehende Nachrichten geeignet ist, wobei die Protokollsendeeinheit insbesondere zum intervallartigen Verschicken von Protokollinformationen über die zweite Kommunikationseinrichtung als eine oder mehrere ausgehende Nachrichten geeignet ist.

Die Protokollsendeeinheit kann demnach Protokollinformationen direkt nach der Erzeugung der Protokollinformationen senden oder aber, Protokollinformationen, die auf der Speichereinrichtung gespeichert werden intervallartig senden. Das Intervall kann sich aus einer abgelaufenen Zeit oder aus der Menge der auf der Speichereinrichtung gespeicherten Protokollinformationen bestimmen. Außerdem kann sich das Intervall auch aus sowohl einer abgelaufenen Zeit als auch aus einer der Menge der auf der Speichereinrichtung gespeicherten Protokollinformationen bestimmen. Vorzugsweise werden die bereits versendeten Protokollinformationen von der Speichereinrichtung gelöscht. Die bereits versendeten Protokollinformationen können beispielsweise sofort oder nach Ablauf einer bestimmten Zeit seit dem Sendezeitpunkt gelöscht werden.

In einem zweiten Aspekt betrifft die Erfindung ein System, aufweisend: mindestens eine der zuvor beschriebenen Vorrichtungen; und einen Server, der über das Zielnetz mit der mindestens einen Vorrichtung verbunden ist, wobei die zweite Kommunikationseinrichtung der mindestens einen Vorrichtung zum Senden der ausgehenden Nachrichten an den Server und zum Empfangen der eingehenden Nachricht von dem Server geeignet sind.

Vorzugsweise weist der Server auf: eine Server-Kommunikationseinrichtung zum Empfangen der ausgehenden Nachricht und Versenden der eingehenden Nachrichten; und eine Server-Speichereinrichtung zum Speichern der empfangenen ausgehenden Nachricht, insbesondere zum Speichern der in der empfangenen ausgehenden Nachricht enthaltenen Protokollinformationen.

Vorzugsweise weist der Server weiterhin auf: eine Server-Auswerteinheit zum Auswerten der in der Server-Speichereinrichtung gespeicherten Protokollinformationen, zum Erzeugen der eingehenden Nachricht, insbesondere einer Aktualisierungsnachricht und einer Anweisungsnachricht, basierend auf der Auswertung der Protokollinformationen und zum Versenden der erzeugten eingehenden Nachricht an eine, mehrere oder alle Vorrichtungen.

Vorzugsweise weist der Server weiterhin auf: eine Server-Benutzereinheit zum Erzeugen der eingehenden Nachricht, insbesondere einer Aktualisierungsnachricht oder einer Anweisungsnachricht, basierend auf Eingaben eines Benutzers und zum Versenden der erzeugten Nachrichten an eine, mehrere oder alle Vorrichtungen.

In einem dritten Aspekt betrifft die Erfindung ein Verfahren zum Protokollieren und zum Filtern von Inhaltsanfragen, wobei das Verfahren die folgenden Schritte aufweist: das Empfangen einer Inhaltsanfrage durch eine erste Kommunikationseinheit einer Funkzugangseinheit; das Protokollieren der Inhaltsanfrage durch eine Protokolleinheit der Funkzugangseinheit; das Filtern der Inhaltsanfrage durch eine Filtereinheit der Funkzugangseinheit, wobei Inhaltsanfragen mit einem Zugangsverweis, der mit einem der vorbestimmten Zugangsverweise übereinstimmt, erlaubt und weitergeleitet werden und Inhaltsanfragen mit einem Zugangsverweis, der nicht mit einem der vorbestimmten Zugangsverweise übereinstimmt, zurückgewiesen werden.

In einem vierten Aspekt betrifft die Erfindung ein Verfahren zum Auswerten der eingehenden Nachricht, das die folgenden Schritte aufweist: das Empfangen einer eingehenden Nachricht durch eine zweite Kommunikationseinrichtung einer Funkzugangseinheit; Ermitteln des Typs der eingehenden Nachricht durch eine Nachrichtenauswerteeinheit der Funkzugangseinheit; Ausführen einer Operation, die vom Typ der eingehenden Nachricht abhängig ist, wobei insbesondere bei einer Aktualisierungsnachricht die Operation das Aktualisieren der Speichereinrichtung (206) ist, und wobei insbesondere bei einer Anweisungsnachricht die Operation das Ausführen einer Anweisung oder eines Satzes von Anweisungen ist

In einem fünften Aspekt betrifft die Erfindung ein Verfahren zur drahtlosen Übertragung von vorbestimmten Inhalten von einer Funkzugangseinheit auf ein mobiles Kommunikationsgerät, wobei das Verfahren die Schritte aufweist: Verbinden des mobilen Kommunikationsgeräts mit der Funkzugangseinheit; Übertragen einer Startseite, die mindestens einen Zugangsverweis auf vorbestimmte Inhalte in einem Zielnetz aufweist, von der Funkzugangseinheit auf das mobile Kommunikationsgerät; Darstellen der Startseite auf dem mobilen Kommunikationsgerät; Auswählen eines Zugangsverweises der Startseite; Übertragen des ausgewählten Zugangsverweises von dem mobilen Kommunikationsgerät zu der Funkzugangseinheit; Laden der Inhalte, auf die der ausgewählte Zugangsverweis verweist, aus dem Zielnetz; und Übertragen der Inhalte, auf die der ausgewählte Zugangsverweis verweist, von der Funkzugangseinheit auf das mobile Kommunikationsgerät.

Die Erfindung kann einen oder mehrere der folgenden Vorteile aufweisen:
Die Datenübertragung in einem offenen Funknetz ist schneller und günstiger (umsonst) im Vergleich zur Datenübertragung über GPRS / UMTS, was insbesondere bei einem Bezug von umfangreicheren Downloads (z.B. Software, Videos etc.) von Vorteil ist. Beispiele hierfür sind Downloads aus einem sogenannten AppStore.

Das Ladevolumen für Downloads kann in einem offenen Funknetz im Gegensatz zu einem UMTS Netz (hier können es beispielsweise 20 MB sein) unbegrenzt. Es können also auch sehr große Datenmengen runtergeladen werden.

Der vorbestimmte Inhalt kann auf Inhalte begrenzt sein, die für den Benutzer, der sein mobiles Kommunikationsgerät mit dem offenen Funknetz über eine bestimmte Funkzugangseinheit verbindet, besonders relevant sind. Ein Beispiel hierfür ist eine Museums-App, die durch den vorbestimmten Inhalt eine Funkzugangseinheit umfasst wird, die in einem Museum steht.

Ein Server kann die Steuerung, Wartung und Aktualisierung der Funkzugangseinheit übernehmen. Dies spart Zeit und Kosten.

Funkzugangseinheiten können den Zugang zu ausschließlich gesetzeskonformen Inhalten gewähren. Dadurch, dass der Inhalt vorbestimmt ist, d.h. nur Zugang zu explizit erlaubten Inhalte ermöglicht wird, ist die erfindungsgemäße Funkzugangseinheit zuverlässiger als Vorrichtungen, die nur den Zugang zu explizit nicht-erlaubten Inhalten verweigern. Dadurch kann ein offenes Funknetz ohne Authentifizierung zur Verfügung gestellt werden.

### Kurze Beschreibung der Zeichnungen

Fig. 1 zeigt eine schematische Darstellung von Vorrichtungen zum Bereitstellen eines vorbestimmten Inhalts über ein offenes Funknetz gemäß einer ersten Ausführungsform.
Fig. 2 zeigt eine schematische Darstellung einer Funkzugangseinheit gemäß der ersten Ausführungsform.
Fig. 3 zeigt ein Flussdiagramm, das die Verfahren beschreibt, die gemäß der ersten Ausführungsform durch eine Verbindungseinheit und eine Filtereinheit der Funkzugangseinheit ausgeführt werden.
Fig. 4 zeigt eine schematische Darstellung eines Funkzugangseinheits-Systems gemäß der ersten Ausführungsform, das vier Funkzugangseinheiten und einen Server aufweist.
Fig. 5 zeigt eine schematische Darstellung des Servers gemäß der ersten Ausführungsform.
Fig. 6 zeigt ein Flussdiagramm, das ein Verfahren beschreibt, das gemäß der ersten Ausführungsform durch die Nachrichtenauswerteeinheit der Funkzugangseinheit ausgeführt wird.
Fig. 7a zeigt eine schematische Darstellung verschiedener Einheiten und Vorrichtungen der Funkzugangseinheit und des Servers gemäß der ersten Ausführungsform.
Fig. 7b zeigt eine schematische Darstellung verschiedener Einheiten und Vorrichtungen der Funkzugangseinheit und des Servers gemäß einer alternativen Ausführungsform.
Fig. 8 zeigt ein Blockdiagramm eines beispielhaften Computersystems, in dem ein Satz von Anweisungen ausgeführt werden kann, die das Computersystem veranlassen, eines oder mehrere der hier beschriebenen Verfahren auszuführen.

Für ähnliche Elemente werden in den Zeichnungen die gleichen Referenzzeichen verwendet.

### Ausführliche Beschreibung

In der folgenden Beschreibung werden aus Erklärungsgründen zahlreiche spezifische Details dargelegt, um ein grundlegendes Verständnis für einige beispielhafte Ausführungsformen zu vermitteln. Der Fachmann versteht, dass die vorliegende Erfindung auch ohne diese spezifischen Details ausgeführt werden kann.

Gemäß einer ersten Ausführungsform der Erfindung wird eine Funkzugangseinheit zum Bereitstellen eines vorbestimmten Inhalts über ein offenes Funknetz, bereitgestellt. Die Funkzugangseinheit 210 ist vorzugsweise mit einem Router 250 verbunden.

Die Funkzugangseinheit 210 ist geeignet, mit mobilen Kommunikationsgeräten 100 (beispielsweise Handys, PDAs, Tablet-PCs und Notebooks) eine drahtlose Verbindung herzustellen. Vorzugsweise ist die Funkzugangseinheit 210 ein Personal Computer (PC), der einen Prozessor 204, eine Speichereinrichtung 206 und eine erste Kommunikationseinrichtung 202 sowie vorzugsweise eine zweite Kommunikationseinrichtung 208 aufweist.

Die erste Kommunikationseinrichtung 202 ist eine handelsübliche W-LAN Karte 202, die vorzugsweise zu dem IEEE 802.11 Standard kompatibel ist. Über genau diese erste

Kommunikationseinrichtung 202 stellt die Funkzugangseinheit 210 eine Verbindung zu einem mobilen Kommunikationsgerät 100 her. Da es sich hierbei um ein offenes Funknetz handelt, findet bei dem Verbindungsaufbau keine Authentifizierung mit Benutzerkennung und Kennwort statt. Der Benutzer des mobilen Kommunikationsgeräts 100 bleibt also - abgesehen von Daten, die das mobile Kommunikationsgerät 100 betreffen (beispielsweise Betriebssystem, Spracheinstellung des Betriebssystems, MAC-Adresse und andere derartiger Informationen) - anonym.

Sobald eine Verbindung zwischen Funkzugangseinheit 210 und einem mobilen Kommunikationsgerät 100 hergestellt ist, ermöglicht die Funkzugangseinheit 210 dem mobilen Kommunikationsgerät 100 Zugang zu einem vorbestimmten Inhalt 420. Dieser vorbestimmte Inhalt 420 weist eine Startseite auf, die einen Zugangsverweis oder eine Vielzahl von Zugangsverweisen zu anderen Seiten aufweist (auch als Adressen, Links oder Hyperlinks bezeichnet). Die Startseite mit der Vielzahl von Zugangsverweisen ist vorzugsweise auf der Speichereinrichtung 206 der Funkzugangseinheit 210 gespeichert. Die Zugangsverweise wiederum führen vorzugsweise zu weiteren Inhalten, die durch den vorbestimmten Inhalt 420 umfasst werden. Allerdings können die weiteren Inhalte entweder auf der Speichereinrichtung 202 der Funkzugangseinheit 210 gespeichert sein oder aber auch nur über das Internet 400 erreichbar sein. Um dem mobilen Kommunikationsgerät 100 Zugriff auf letztere Inhalte zu ermöglichen, weist die Funkzugangseinheit 210 vorzugsweise eine zweite Kommunikationseinrichtung 208 auf. Die zweite Kommunikationseinrichtung kann in Form einer Netzwerkkarte 208 und/oder einer WLAN-Karte 208 und/oder einer UMTS- und/oder GPRS-Einrichtung vorliegen. Die zweite Kommunikationseinrichtung 208 in Form einer Netzwerkkarte 208 ist vorzugsweise kompatibel mit dem IEEE 802.3 Standard. Mit Hilfe eines Netzwerkkabels wird die Netzwerkkarte 208 der Funkzugangseinheit 210 mit einer Netzwerkkarte eines Routers 250 operativ verbunden. In einer alternativen Ausführungsform sind die Startseite und alle weiteren vorbestimmten Inhalte 420 nur über das Internet 400 erreichbar.

Im Allgemeinen sind Router 250 Netzwerkgeräte, die mehrere Rechnernetze ― je nach Sichtweise ― koppeln oder trennen. Dabei analysiert der Router die ankommenden Datenpakete nach ihrem Zielzugangsverweis und blockt diese oder leitet sie weiter. Geroutete, d. h. weitergeleitete, Pakete gelangen so entweder in ein direkt am Router 250 angeschlossenes Zielnetz 400 (auch Ziel-Subnetz) oder werden zu einem anderen im Netz 400 erreichbaren Router 250 weitergereicht. Vorzugsweise koppelt der Router 250 die Funkzugangseinheit 210 mit dem Internet 400. Dadurch kann die Funkzugangseinheit 210 Zugriff auf Inhalte ermöglichen, die von dem vorbestimmten Inhalt 420 umfasst werden und nur über den Router 250 und/oder das Internet 400 erreichbar sind.

Vorzugsweise weist die Funkzugangseinheit 210 eine Anzeige auf. Die Anzeige zeigt den gleichen vorbestimmten Inhalt an, der auch auf den mit der Funkzugangseinheit 210 verbundenen mobilen Kommunikationsgeräten 100 angezeigt werden kann. Bei der Anzeige kann es sich um einen Flüssigkeitskristallbildschirm, vorzugsweise um einen berührungssensitiven Flüssigkeitskristallbildschirm handeln. Berührungssensitive Bildschirme weisen den Vorteil auf, dass sie gleichzeitig als Anzeige- und Bedienelement verwendet werden können.

Vorzugsweise weist die Funkzugangseinheit 210 eine Filtereinheit 232 auf, die software-basiert oder hardware-basiert oder als Kombination des zuvor genannten implementiert sein kann. Die Filtereinheit 232 verhindert, dass ein mit der Funkzugangseinheit 210 über die erste Kommunikationseinrichtung 202 verbundenes mobiles Kommunikationsgerät 100 Zugriff auf Inhalte aus dem Internet 400 erhält, die nicht durch den vorbestimmten Inhalt 420 umfasst sind. Vorzugsweise ist die Filtereinheit 232 software-basiert, d.h. ein dementsprechender Satz von Anweisungen ist in der Speichereinrichtung 206 der Funkzugangseinheit 210 gespeichert und wird von dem Prozessor 204 der Funkzugangseinheit 210 ausgeführt. Weiterhin weist die Speichereinrichtung 206 eine Zugangsverweisdatenbank auf, die diejenigen Zugangsverweise aufweist, die zu den vorbestimmten Inhalten 420 führen (vorliegend auch als vorbestimmte Zugangsverweise bezeichnet). Bei jedem versuchten Zugriff eines mobilen Kommunikationsgeräts 100 auf Inhalte aus dem Internet 400, gleicht die Filtereinheit 232 der Zugangsverweis des versuchten Zugriffs mit den Zugangsverweisen seiner Zugangsverweisdatenbank ab. Liegt der Zugangsverweis des versuchten Zugriffs auch in der Zugangsverweisdatenbank vor, gewährt die Filtereinheit 232 den Zugriff. Liegt der Zugangsverweis des versuchten Zugriffs nicht in der Zugangsverweisdatenbank vor, dann verwehrt die Filtereinheit 232 den Zugriff. Dadurch verhindert die Filtereinheit 232, dass mobile Kommunikationsgeräte 100 Zugriff auf nicht-vorbestimmte Inhalte 430 erhalten.

Vorzugsweise weist die Funkzugangseinheit 210 eine Protokolleinheit 230 auf, die software-basiert oder hardware-basiert implementiert sein kann. Die Protokolleinheit 230 zeichnet Verbindungsinformationen bezüglich der Verbindungen zwischen mobilen Kommunikationsgeräten 100 und der Funkzugangseinheit 210 auf, die hergestellt wurden bzw. die versucht wurden herzustellen. Die Protokolleinheit 230 zeichnet auch Zugriffsinformationen bezüglich aller Inhaltanfragen eines mit der Funkzugangseinheit 210 verbundenen Kommunikationsgeräts 100 auf. Verbindungsinformationen können sowohl Daten über das Betriebssystem, die Spracheinstellung und die MAC-Adresse der mobilen Kommunikationsgeräte 100, als auch Daten über Uhrzeit und Dauer der Verbindung aufweisen. Zugriffsinformationen können die MAC-Adresse der mobilen Kommunikationsgeräte 100, den Zugriffszugangsverweis, Daten über Uhrzeit und Dauer des Zugriffs, und übertragenes Datenvolumen aufweisen. Die Protokolleinheit 230 speichert die Verbindungsinformationen in einer Verbindungsdatenbank und die Zugriffsinformationen in einer Zugriffsdatenbank auf der Speichereinrichtung 206. Sowohl Verbindungsinformationen als auch Zugriffsinformationen werden vorliegend auch als Protokollinformationen bezeichnet. Vorzugsweise weist die Protokolleinheit 230 der Funkzugangseinheit 210 eine Mustererkennung auf. Die Mustererkennung beobachtet jeden Datenstrom, der durch einen Zugriff eines mobilen Kommunikationsgeräts 100 auf einen Inhalt (also durch eine Inhaltsanfrage) erzeugt wird, und kann ein oder mehrere vorbestimmte Muster identifizieren. Jedem der vorbestimmten Muster ist ein Mustertyp zugeordnet. Wird ein vorbestimmtes Muster erkannt, erzeugt die Protokolleinheit 230 Musterinformationen, die vorzugsweise die MAC-Adresse des zugreifenden mobilen Kommunikationsgeräts 100, den Zugriffszeitpunkt und den Mustertyp aufweist. Die Protokolleinheit 230 speichert die Mustererkennungsinformation als einen Eintrag in einer Datenstromdatenbank auf der Speichereinrichtung 206. Eine derartige Mustererkennung kann verwendet werden, um beispielsweise Downloads eines bestimmten Typs zu erkennen. Beispielsweise könnte der vorbestimmte Inhalt eine AppStore-Webseite umfassen. Lädt ein Benutzer aus einem AppStore ein Programm (auch als "App" bezeichnet) herunter, kann der Download AppStore-spezifisch ein bestimmtes Bitmuster aufweisen. Dieses Bitmuster wird von der Protokolleinheit 230 erkannt und zum Nachweis eines Downloads gespeichert, falls es ein vorbestimmtes Muster ist. Vorbestimmte Muster und ihre zugehörigen Mustertypen können in der Speichereinrichtung 206 der Funkzugangseinheit 210 gespeichert werden.

Vorzugsweise ist die Funkzugangseinheit 210 geeignet dazu, über den Router 250 Nachrichten mit einem Server 300 auszutauschen. Der Server 300 ist vorzugsweise über den Router 250 und/oder das Internet 400 erreichbar und kann wiederum mit weiteren Funkzugangseinheiten 212, 214, 216 Nachrichten austauschen.

Vorzugsweise ist die zweite Kommunikationseinrichtung 208 geeignet, eingehende Nachrichten zu empfangen, insbesondere eingehende Nachrichten zu empfangen, die von dem Server 300 an die Funkzugangseinheit 210 übermittelt werden. Derartige eingehende Nachrichten umfassen vorzugsweise Aktualisierungsnachrichten und Anweisungsnachrichten. Die zweite Kommunikationseinrichtung kann dazu eine geeignete Kommunikationsschnittstelle aufweisen.

Vorzugsweise weist die Funkzugangseinheit 210 eine Nachrichtenauswerteeinheit 236 auf. In einem ersten Schritt empfängt die Funkzugangseinheit 210 eine eingehende Nachricht über die zweite Kommunikationseinrichtung 208 und übermittelt die empfangene eingehende Nachricht an eine Nachrichtenauswerteinheit. Vorzugsweise weist die Nachrichtenauswerteeinheit 236 eine Authentifizierungseinheit 238 auf, die die eingehende Nachricht authentifiziert. Die Authentifizierungseinheit 238 verwirft die eingehende Nachricht, falls die Authentifizierung fehlschlägt. Ist die Authentifizierung erfolgreich, identifiziert eine Nachrichtenidentifikationseinheit 240 der Nachrichtenauswerteeinheit 236 den Typ der eingehenden Nachricht und führt basierend auf dem Typ der eingehenden Nachricht eine Funktion durch: Bei Aktualisierungsnachrichten werden Daten und/oder Informationen und/oder Anweisungen, die auf der Funkzugangseinheit 210 gespeichert sind, insbesondere auf der Speichereinrichtung 206, aktualisiert. Beispielsweise könnte die gespeicherte Startseite aktualisiert werden. Dadurch kann der Aufbau, das Design, aber insbesondere aber auch die Zugangsverweise auf der Startseite aktualisiert und konfiguriert werden. Bei Anweisungsnachrichten extrahiert eine Anweisungseinheit 224 der Funkzugangseinheit 210 eine Anweisung und/oder einen Satz von Anweisungen und führt diese(n) aus. Dadurch kann die Funkzugangseinheit 210 ferngesteuert werden und insbesondere gestartet, neugestartet oder abgeschaltet werden. Vorzugsweise können durch Anweisungsnachrichten empfangene Anweisungen auch auf der Speichereinrichtung 206 gespeicherte Anweisungen aufrufen.

Vorzugsweise ist die zweite Kommunikationseinrichtung 208 der Funkzugangseinheit 210 geeignet, ausgehende Nachrichten zu übermitteln, insbesondere ausgehende Nachrichten an den Server 300 zu übermitteln.

Vorzugsweise kann die Funkzugangseinheit 210 eine Protokollsendeeinheit 234 aufweisen, die geeignet ist Protokollinformationen in ausgehende Nachrichten zu verpacken und an die zweite Kommunikationseinrichtung 208 zu übermitteln. Die zweite Kommunikationseinrichtung 208 wiederum ist geeignet die ausgehende Nachrichten mit Protokollinformationen zu verschicken, insbesondere an den Server 300. Vorzugsweise übermittelt die Protokollsendeeinheit 234 mit Hilfe der zweiten Kommunikationseinrichtung 208 in Intervallen Protokollinformationen, die davor noch nicht übermittelt worden sind. Das Intervall kann sich aus einer abgelaufenen Zeit bestimmen, oder es bestimmt sich aus der angehäuften Datenmenge, der noch nicht übermittelten Protokollinformationen oder es bestimmt sich aus einer Kombination des zuvor genannten. Insbesondere können Protokollinformationen, direkt nachdem sie erzeugt worden sind, in ausgehende Nachrichten verschickt werden. Besonders bevorzugt ist es, wenn die ausgehenden Nachrichten an den Server 300 gesendet wird, der eine Server-Speichereinrichtung 306 aufweisen kann. Der Server 300 speichert dann die über die ausgehenden Nachrichten übermittelten Protokollinformationen zusammen mit einem Verweis auf die Funkzugangseinheit 210, die die Protokollinformationen an den Server 300 gesendet hat.

Vorzugsweise weist der Server 300 eine Auswerteeinheit 318 auf, die die auf der Server-Speichereinrichtung 306 gespeicherten Protokollinformationen auswertet und insbesondere basierend auf den ausgewerteten Protokollinformationen Aktualisierungsnachrichten erstellen kann, die an Funkzugangseinheiten 210 geschickt werden, um dort beispielsweise die Startseite(n) zu aktualisieren.

Vorzugsweise weist der Server 300 auch eine Benutzerschnittstelle 320 auf, anhand der ein Benutzer Aktualisierungsnachrichten und/oder Anweisungsnachrichten erstellen kann, die an Funkzugangseinheiten 210 geschickt werden.

Vorzugsweise können mehrere Funkzugangseinheiten 210, 212 ein einzelnes logisches Netzwerk erzeugen. Sind mehrere Funkzugangseinheiten 210, 212 örtlich so nah beieinander aufgestellt, dass die von ihnen abgedeckte Fläche (auch als Zelle 110, 120 bezeichnet) überlappt, so können die mehreren Funkzugangseinheiten 210, 212 ein einzelnes logisches Netzwerk erzeugen. Dies ist von Vorteil, weil ein mobiles Kommunikationsgerät 101, 102, 103 sich nur einmal mit dem logischen Netzwerk verbinden muss. Selbst wenn das mobile Kommunikationsgerät 101, 102, 103 von einer Zelle in die nächste wechselt, kann es - ohne die Verbindung zu dem logischen Netzwerk zu verlieren - in einem Handoverprozess von einer Zelle 110, 120 in die nächste Zelle 110, 120 übergeben werden. Abhängig von der Zelle, mit der das mobile Kommunikationsgerät 101, 102, 103 gerade verbunden ist, kann allerdings ein anderer vorbestimmter Inhalt 420, 422 angezeigt werden. Es besteht außerdem die Möglichkeit, dass der Benutzer manuell zwischen den verschiedenen Zellen 110, 120 hin- und herwechseln kann.

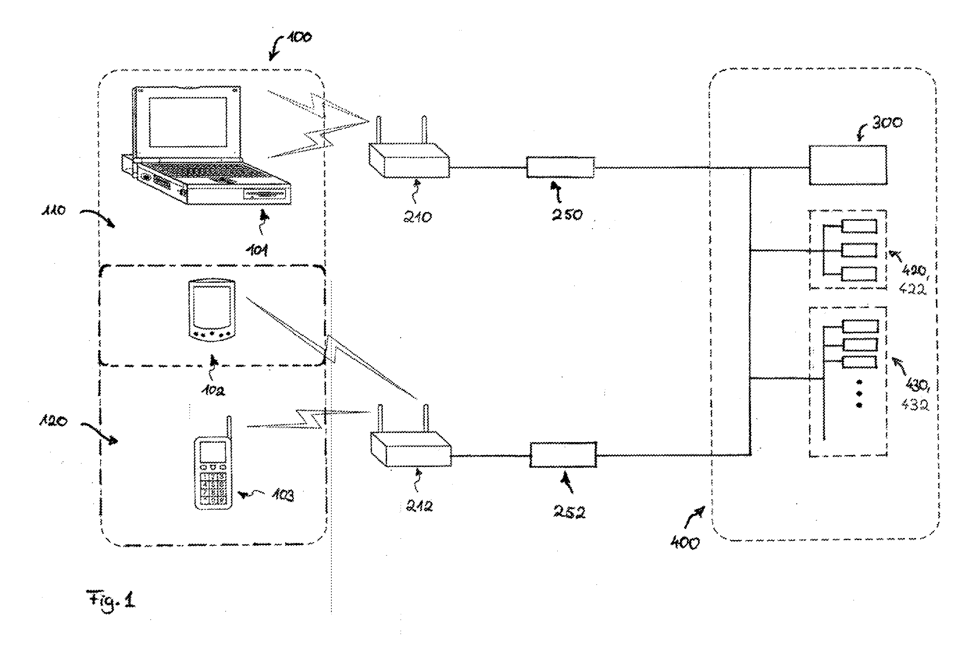

Figur 1 zeigt eine schematische Darstellung eines offenen Funknetzes zum Bereitstellen eines vorbestimmten Inhalts 420, 422. Zwei Funkzugangseinheiten 210, 212 erzeugen jeweils eine Zelle 110, 120: eine erste Zelle 110 und eine zweite Zelle 120. In der ersten Zelle 110 befinden sich zwei mobile Kommunikationsgeräte: ein Notebook 101 und ein PDA 102. In der zweiten Zelle 120 befinden sich ebenfalls zwei mobile Kommunikationsgeräte, der PDA 102 und ein Smartphone 103. Alle mobilen Kommunikationsgeräte 101, 102 und 103 können eine Verbindung zu dem offenen Funknetz, einem logischen Netzwerk, herstellen. Allerdings können nur mobile Kommunikationsgeräte 101 und 102 eine physikalische Verbindung mit der Funkzugangseinheit 210 herstellen und nur mobile Kommunikationsgeräte 102 und 103 eine physikalische Verbindung mit der Funkzugangseinheit 212 herstellen. Folglich hat das mobile Kommunikationsgerät 101 lediglich die Möglichkeit, den vorbestimmten Inhalt 420 zu empfangen, der durch die Funkzugangseinheit 210 bereitgestellt wird, während das mobile Kommunikationsgerät 102 die Möglichkeit hat, sowohl den vorbestimmten Inhalt 420 der Funkzugangseinheit 210 als auch den vorbestimmten Inhalt 422 der Funkzugangseinheit 212 zu empfangen. Beide Funkzugangseinheiten 210 und 212 sind mit jeweils einem Router 250, 252 verbunden. Dabei kann die Verbindung zwischen der Funkzugangseinheit 210, 212 und dem Router 250, 252 als eine drahtlose Verbindung gemäß dem IEEE 802.11 Standard oder als eine Kabelverbindung gemäß dem IEEE 802.3 ausgestaltet sein. Die jeweiligen Router 250, 252 koppeln die Funkzugangseinheiten 210, 212 an das Internet 400. Insbesondere koppeln sie die Funkzugangseinheiten 210, 212 an einen Server 300, der Bestandteil des Internets 400 ist. Der Server 300 übernimmt Verwaltungs- und Aktualisierungsaufgaben für die Funkzugangseinheiten 210, 212, wie unten noch zu erläutern ist. Das Internet 400 weist Inhalte auf, die für die vorliegende Anwendung im Wesentliche in zwei Bereiche gegliedert werden: den vorbestimmten Inhalten 420, 422 und den nicht-vorbestimmten Inhalten 430, 432. Zwar koppelt der Router die Funkzugangseinheiten 210, 212 an das gesamte

Internet 400. Allerdings stellen die Funkzugangseinheiten 210, 212 den mobilen Kommunikationsgeräten nur den vorbestimmten Inhalt 420 bereit. Hierbei ist zu beachten, dass sich der vorbestimmte Inhalt 420, 422 für die jeweiligen Funkzugangseinheiten 210, 212 durchaus unterscheiden kann (aber nicht muss). Dies hat zur Folge, dass das mobile Kommunikationsgerät 101 nur Zugriff auf den vorbestimmten Inhalt 420 der Funkzugangseinheit 210 erhält und mobiles Kommunikationsgerät 103 nur Zugriff auf den vorbestimmten Inhalt 422 der Funkzugangseinheit 212 erhält, während das mobile Kommunikationsgerät 102 sowohl auf den vorbestimmten Inhalt 420 als auch auf den vorbestimmten Inhalt 422 Zugriff erhält. Außerdem ist zu beachten, dass die Teile der vorbestimmten Inhalte 420, 422 auch lokal auf die Funkzugangseinheiten 210, 212 gespeichert sein können. Typischerweise ist die Startseite - also die Seite, die nach Herstellung einer Verbindung zwischen mobilen Kommunikationsgeräten 101, 102 und 103 als erstes angezeigt wird - lokal auf die Funkzugangseinheiten 210, 212, 214, 216 gespeichert.

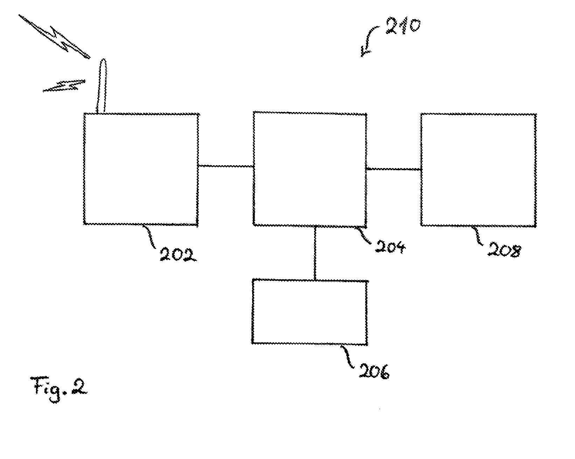

Figur 2 zeigt eine schematische Darstellung der Funkzugangseinheit 210. Die Funkzugangseinheit 210 weist eine erste Kommunikationseinrichtung 202, einen Prozessor 204, eine Speichereinrichtung 206 und eine zweite Kommunikationseinrichtung 208 auf. Bei der ersten Kommunikationseinrichtung 202 handelt es sich um eine WLAN-Karte 202, die geeignet ist die Zelle 110 zu erzeugen, in der mobile Kommunikationsgeräte 101 und 102 eine drahtlose Verbindung mit der Funkzugangseinheit 210 herstellen können. Der Prozessor 204 ist operativ mit der ersten Kommunikationseinrichtung 202 verbunden. Der Prozessor 204 ist außerdem operativ mit der Speichereinrichtung 206 und mit der zweiten Kommunikationseinrichtung 208 verbunden. Der Prozessor 204 kann auf der Speichereinrichtung 206 gespeicherte Anwendungssätze ausführen. Insbesondere führt der Prozessor 204 einen Anwendungssatz aus, um die Aufgabe einer Filtereinheit 232, einer Verbindungseinheit, einer Protokolleinheit 230, einer Protokollsendeeinheit 234, einer Nachrichtenauswerteeinheit 236, einer Authentifizierungseinheit 238, einer Nachrichtenidentifizierungseinheit 240 und anderer derartiger Einheiten zu übernehmen. Besteht eine Verbindung zwischen dem mobilen Kommunikationsgerät 101 und der Funkzugangseinheit 210 und empfängt die Funkzugangseinheit 210 eine Inhaltsanfrage für einen Inhalt (auch als Inhaltsanfrage bezeichnet), prüft die Filtereinheit 232 diese Inhaltsanfrage. Eine derartige Inhaltsanfrage weist einen Zugangsverweis der Inhaltsanfrage auf (eine Inhaltsanfrage kann als ein versuchter Zugriff auf einen Inhalt angesehen werden). Führt der Zugangsverweis zu einem Inhalt, der lokal auf der Speichereinrichtung 206 der Funkzugangseinheit 210 gespeichert ist (beispielsweise kann die Startseite auf der Speichereinrichtung 206 gespeichert sein), so erlaubt die Filtereinheit 232 die Inhaltsanfrage. Führt der Zugangsverweis zu einem Inhalt, der im Internet 400 gespeichert ist, geht die Filtereinheit 232 folgendermaßen vor: Alle Zugangsverweise, die zu Inhalten führen, die durch den vorbestimmten Inhalt 420 umfasst sind, sind auf der Speichereinrichtung 206 gespeichert. Die Filtereinheit 232 überprüft also, ob der Zugangsverweis der Inhaltsanfrage mit einer der auf der Speichereinrichtung 206 hinterlegten vorbestimmten Zugangsverweise übereinstimmt. Ist dies der Fall, so erlaubt sie die Inhaltsanfrage und leitet die Inhaltsanfrage über die zweite Kommunikationseinrichtung 202 an den Router 250 weiter. Ist dies nicht der Fall, so verbietet sie die Inhaltsanfrage und leitet die Inhaltsanfrage nicht an den Router 250 weiter. Dadurch wird gewährleistet, dass die Funkzugangseinheit 210 den mit der Funkzugangseinheit 210 verbundenen mobilen Kommunikationsgeräten 101, 102 ausschließlich vorbestimmte Inhalte 420 bereitstellt.

Vorzugsweise werden auch Inhaltsanfragen mit Zugangsverweise, die zu einem lokal auf der Speichereinrichtung 206 gespeicherten Inhalt führen, durch die Filtereinheit 232 überprüft. D.h. auch bei derartigen Inhaltsanfragen überprüft die Filtereinheit, ob der Zugangsverweis der Inhaltsanfrage mit einer der auf der Speichereinrichtung 206 gespeicherten vorbestimmten Zugangsverweise übereinstimmt. Nur wenn das der Fall ist, erlaubt die Filtereinheit 232 die Inhaltsanfrage und leitet dies weiter. Andernfalls wird die Inhaltsanfrage zurückgewiesen. Dies bringt den Vorteil mit sich, dass dadurch die mobilen Kommunikationsgeräte 100 daran gehindert werden, auf für den regulären Benutzergebrauch des offenen Funknetzes nicht relevante Informationen, die auf der Speichereinrichtung 206 gespeichert sind, zuzugreifen.

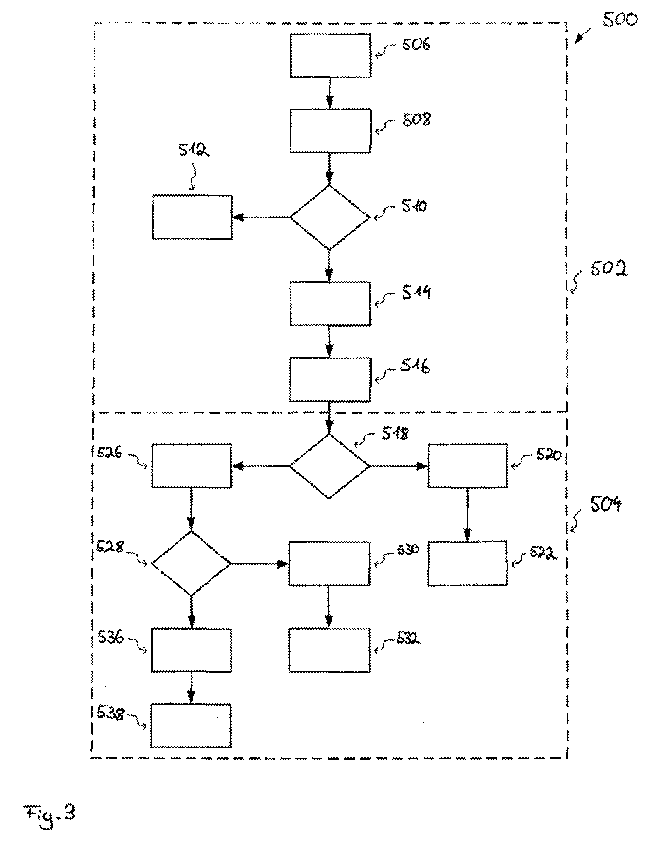

Figur 3 zeigt ein Flussdiagram, dass zwei Verfahren 500 die durch die Funkzugangseinheit 210, durchgeführt werden im Detail erläutert. Eine Verbindungseinheit (in keiner der Figuren gezeigt) führt ein Initialisierungsverfahren 502 durch. Die Funkzugangseinheit 210 empfängt eine Verbindungsanfrage 506 von einem mobilen Kommunikationsgerät 100. Aus der Anmeldungsanfrage 506 wird die MAC-Adresse, das Betriebssystem und die Spracheinstellung des mobilen Kommunikationsgeräts 100 ausgelesen 508. Ist kein von der Funkzugangseinheit 210 unterstütztes Betriebssystem vorhanden oder wurde die MAC-Adresse gesperrt 510, beispielsweise aus Missbrauchsgründen, wird die Verbindungsanfrage verweigert 512. Andernfalls wird eine Verbindung zwischen dem anfragenden mobilen Kommunikationsgerät 100 und der Funkzugangseinheit 210 hergestellt 514. Das mobile Kommunikationsgerät 100 kann nun eine Inhaltsanfrage an die Funkzugangseinheit 210 stellen 516. Die Funkzugangseinheit 210 verarbeitet die Inhaltsanfrage in seiner Filtereinheit 232, um sicher zu stellen, dass dem mobilen Kommunikationsgerät 100 nur vorbestimmte Inhalte bereitgestellt werden 504. Zuerst liest die Filtereinheit 232 einen Zugangsverweis aus der Inhaltsanfrage und bestimmt, ob der Zugangsverweis zu einem Inhalt führt, der lokal in der Speichereinrichtung 206 der Funkzugangseinheit 210 gespeichert ist 520 oder, ob der Zugangsverweis zu einem Inhalt führt, der im Internet 400 gespeichert ist 526. Ist der Inhalt lokal gespeichert 520, erlaubt die Filtereinheit 232 den Zugriff auf den Inhalt 522. Ist der Inhalt im Internet 400 gespeichert 526, dann gleicht die Filtereineinheit den Zugangsverweis der Inhaltsanfrage mit den vorbestimmten Zugangsverweisen ab, die in der Speichereinrichtung 206 der Funkzugangseinheit 210 gespeichert sind. Stimmt der

Zugangsverweis der Inhaltsanfrage mit einer der vorbestimmten Zugangsverweise überein 536, dann erlaubt die Filtereinheit 232 den Zugriff auf diesen Inhalt 538. Die Inhaltsanfrage wird also an den Router 250 weitergeleitet. Stimmt der Zugangsverweis der Inhaltsanfrage mit keiner der vorbestimmten Zugangsverweise überein 530, dann wird der Zugriff auf diesen Inhalt verweigert 532. Die Inhaltsanfrage wird also nicht an den Router 250 weitergeleitet.

Alternativ kann die Filtereinheit 232 auch unabhängig davon, ob der Zugangsverweis der Inhaltsanfrage ein lokaler Zugangsverweis ist, also zu einem Inhalt führt, der auf der Funkzugangseinheit 210 gespeichert ist, den Zugangsverweis jeder Inhaltsanfrage mit den vorbestimmten Zugangsverweise abgleichen und überprüfen, ob der Zugangsverweis der Inhaltsanfrage mit einer der vorbestimmten Zugangsverweise übereinstimmt. Dann müssen allerdings Zugangsverweise zu vorbestimmten Inhalten, die lokal gespeichert sind, ebenfalls durch die vorbestimmten Zugangsverweise umfasst sein.

Damit die mobilen Kommunikationsgeräte 101, 102, 103 nicht unnötige Inhaltsanfragen für Inhalte stellen, die sowieso nicht über die Funkzugangseinheit 210 erreichbar sind, ist die Startseite vorzugsweise so gestaltet, dass die Startseite nur Zugangsverweise umfasst, die zu vorbestimmten Inhalten 420, 422 führen.

Vorzugsweise ist eine Mehrzahl verschiedener Startseiten lokal auf der Speichereinrichtung 206 der Funkzugangseinheit 210 gespeichert. Beispielsweise können Startseiten in verschiedenen Sprachen gespeichert sein. Verbindet sich ein mobiles Kommunikationsgerät 100 mit einer Funkzugangseinheit 210 wird besonders bevorzugt auch die Spracheinstellung des mobilen Kommunikationsgeräts 100 an die Funkzugangseinheit 210 übermittelt. Die erste Seite, die an das mobile Kommunikationsgerät 100 übermittelt wird, ist dann die Startseite, die der Spracheinstellung des mobilen Kommunikationsgeräts 100 entspricht.

Vorzugsweise liegt die Startseite als Webseite vor, die mit einem Browser des mobilen Kommunikationsgeräts 100 abgerufen werden kann. Die Webseite ist vorzugsweise gemäß dem HTML5 Standard programmiert, so dass die Webseite auf einem Browser eines mobilen Kommunikationsgeräts wie eine App dargestellt werden kann.

Vorzugsweise handelt es sich bei Zugangsverweise um Uniform Resource Locators (URLs), die einen Inhalt über die zu verwendende Zugriffsmethode (z. B. das verwendete Netzwerkprotokoll wie HTTP oder FTP) und den Ort des Inhalts (der auch als Resource bezeichnet werden kann) in einem Computernetzwerk, vorzugsweise dem Internet 400, identifiziert und lokalisiert.

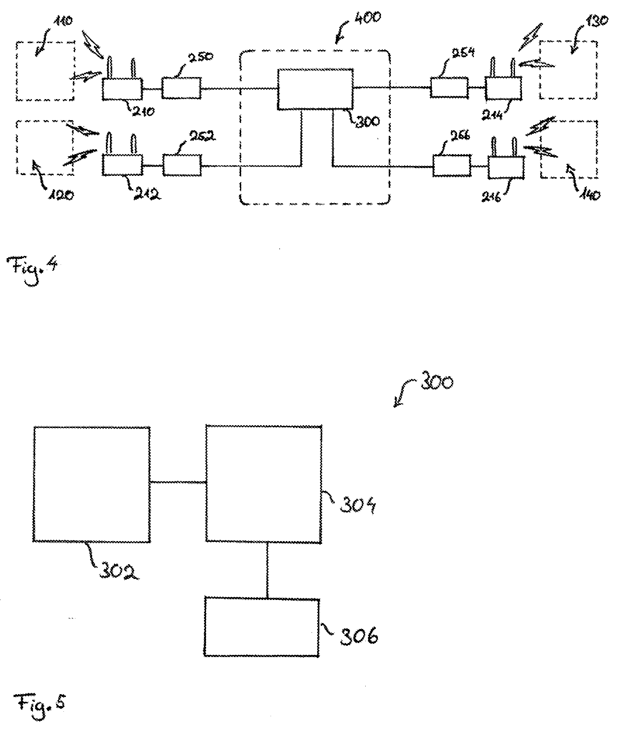

Figur 4 zeigt eine schematische Darstellung eines Systems, das vier Funkzugangseinheiten 210, 212, 214, 216 und einen Server 300 aufweist. Natürlich ist ein derartiges System nicht auf vier Funkzugangseinheiten 210, 212, 214, 216 beschränkt, sondern kann jegliche Anzahl von Funkzugangseinheiten 210, 212, 214, 216, auch nur eine Funkzugangseinheit 210, 212, 214, 216, aufweisen. Jede der vier Funkzugangseinheiten 210, 212, 214, 216 kann jeweils eine Zelle 110, 120, 130, 140 erzeugen, wobei die Zellen 110, 120, 130, 140 zwar räumlich getrennt dargestellt sind, sich allerdings auch räumlich überlappen können. Jede der Funkzugangseinheiten 210, 212, 214, 216 ist außerdem über einen Router 250, 252, 254, 256 mit dem Internet 400 verbunden. Insbesondere können die Funkzugangseinheiten 210, 212, 214, 216 über den Router 250, 252, 254, 256 mit dem Server 300 kommunizieren.

Figur 5 zeigt eine schematische Darstellung des Servers 300. Der Server 300 weist eine Server-Kommunikationseinrichtung 302, einen Server-Prozessor 304 und eine Server-Speichereinrichtung 306 auf. Der Server 300 übernimmt, wie bereits oben erwähnt, Verwaltungs- und Aktualisierungsaufgaben für die Funkzugangseinheiten 210, 212, 214, 216. Darunter ist zu verstehen, dass der Server 300 Nachrichten mit den Funkzugangseinheiten 210, 212, 214, 216 austauschen kann. Eingehende Nachrichten, die der Server 300 an die Funkzugangseinheiten 210, 212, 214, 216 übermittelt, können insbesondere Aktualisierungsnachrichten und/oder Anweisungsnachrichten sein und/oder umfassen. Aktualisierungsnachrichten sind geeignet, insbesondere folgendes hervorzurufen: Änderungen der auf der Speichereinrichtung 206 gespeicherten vorbestimmten Inhalte, insbesondere der Startseite (Änderung der Zugangsverweise, der Werbeflächen, des Designs); und Aktualisierung der auf der Speichereinrichtung 206 gespeicherten Anweisungssätze und/oder Zugangsverweise. Außerdem können ausgehende Nachrichten, die die Funkzugangseinheiten 210, 212, 214, 216 an den Server 300 schicken, Protokollinformationen umfassen. Der Server 300 weist eine Server-Speichereinrichtung 306 auf, die die über ausgehenden Nachrichten an den Server 300 übermittelten Protokollinformationen speichert. Weiterhin weist der Server 300 eine Server-Auswerteeinheit 308 auf, die die auf der Server-Speichereinrichtung 306 gespeicherten Protokollinformationen auswertet und insbesondere basierend auf den ausgewerteten Protokollinformationen eingehende Nachrichten erstellen kann, die an Funkzugangseinheiten 210, 212, 214, 216 geschickt werden, um dort eine oder mehrere der in der Speichereinrichtung 206 gespeicherten Daten, Informationen und Anweisungssätze zu aktualisieren. Die Server-Auswerteeinheit 308 ist als Kombination des Server-Prozessors 304 mit einem Anweisungssatz, der auf der Server-Speichereinrichtung 306 gespeichert ist, ausgestaltet. Vorzugsweise speichert der Server 300 die über ausgehende Nachrichten empfangenen Protokollinformationen zusammen mit einer Angabe der Funkzugangseinheit ab, die die ausgehende Nachricht mit Protokollinformationen abgeschickt hat.

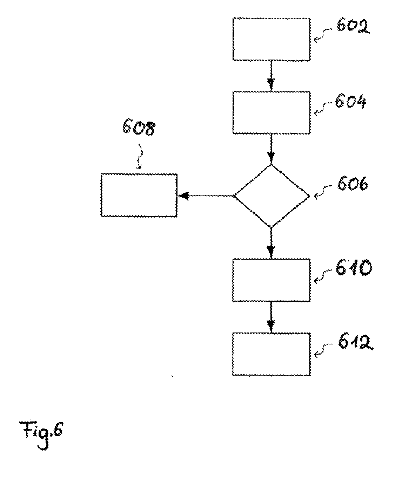

Figur 6 zeigt ein Flussdiagram, dass beispielhaft das Verfahren beschreibt, das durch eine Funkzugangseinheit 210, 212, 214, 216 durchgeführt wird, wenn eine eingehende Nachricht an die Funkzugangseinheit 210, 212, 214, 216 geschickt wird. In einem ersten Schritt empfängt die Funkzugangseinheit 210, 212, 214, 216 eine eingehende Nachricht 602. Anschließend authentifiziert die Funkzugangseinheit 210, 212, 214, 216 die empfangene eingehende Nachricht. Schlägt die Authentifizierung fehl, so wird die empfangene eingehende Nachricht verworfen 608. Ist die Authentifizierung erfolgreich, so wird der Typ der empfangenen eingehenden Nachricht ermittelt 610. Typen der empfangenen eingehenden Nachrichten umfassen vorzugsweise Aktualisierungsnachrichten und Anweisungsnachrichten. Aktualisierungsnachrichten enthalten Aktualisierungsinformationen. Beispiele für Aktualisierungsinformationen sind Aktualisierungen der Daten und/oder Informationen, die auf der Speichereinrichtung 206 gespeichert sind: unter anderem der Startseite, der durch die Startseite umfassten Zugangsverweise und der vorbestimmten Zugangsverweise. Anweisungsnachrichten enthalten eine Anweisung oder einen Satz von Anweisungen, die geeignet sind, von der Funkzugangseinheit 210, 212, 214, 216 durchgeführt zu werden. Nachdem der Typ der eingehenden Nachricht ermittelt worden ist, wird eine Operation durchgeführt, die dem Typ der eingehenden Nachricht entspricht. Bei einer Aktualisierungsnachricht werden beispielsweise die Zugangsverweise auf der Startseite aktualisiert oder ein vorbestimmter Zugangsverweis entfernt oder hinzugefügt. Dadurch kann der vorbestimmte Inhalt, den die Funkzugangseinheit 210, 212, 214, 216 mobilen Kommunikationsgeräten 101, 102, 103 bereitstellt, durch eingehende Nachrichten jederzeit modifiziert werden. Bei einer Anweisungsnachricht führt die Funkzugangseinheit 210, 212, 214, 216 die Anweisung oder den Satz von Anweisungen durch. Dadurch kann die Funkzugangseinheit 210, 212, 214, 216 ferngesteuert werden. Vorzugsweise können derartige eingehende Nachrichten durch den Server 300 an die Funkzugangseinheiten 210, 212, 214, 216 geschickt werden.

Vorzugsweise werden Zugangsverweise auf der Startseite auch durch die vorbestimmten Zugangsverweise umfasst.

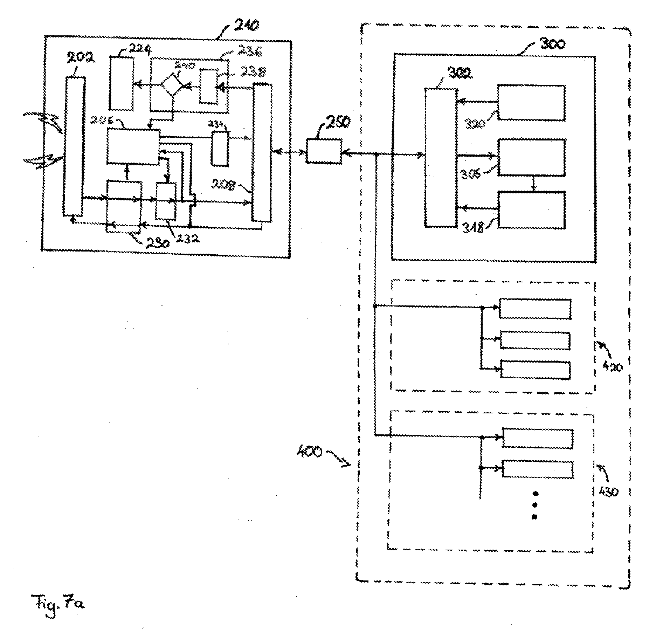

Figur 7a zeigt eine schematische Darstellung verschiedener Einheiten und Vorrichtungen der Funkzugangseinheit 210 und des Servers 300 gemäß der ersten Ausführungsform. Damit können vorbestimmte Inhalte sowohl auf der Speichereinrichtung 206 gespeichert als auch über das Internet 400 verfügbar sein.

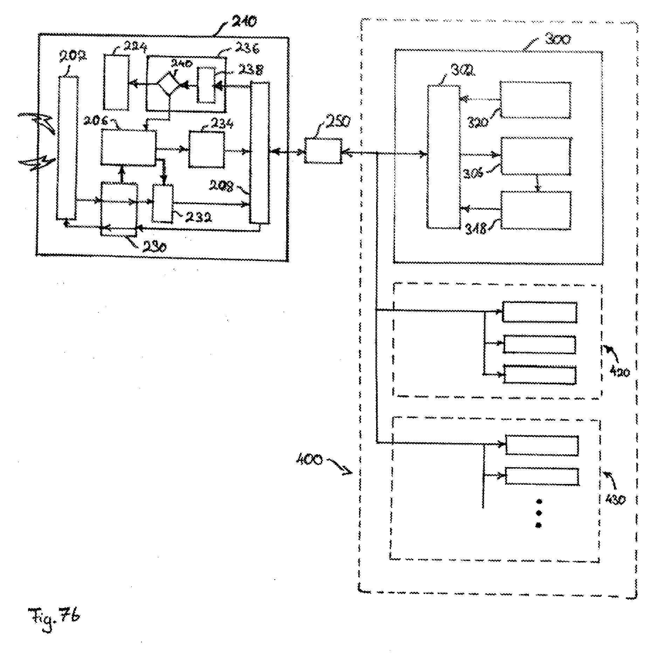

Figur 7b zeigt eine schematische Darstellung verschiedener Einheiten und Vorrichtungen der Funkzugangseinheit 210 und des Servers 300 gemäß einer alternativen Ausführungsform. Hiermit sind vorbestimmte Inhalte lediglich über das Internet 400 verfügbar.

### Beispielhaftes Computersystem

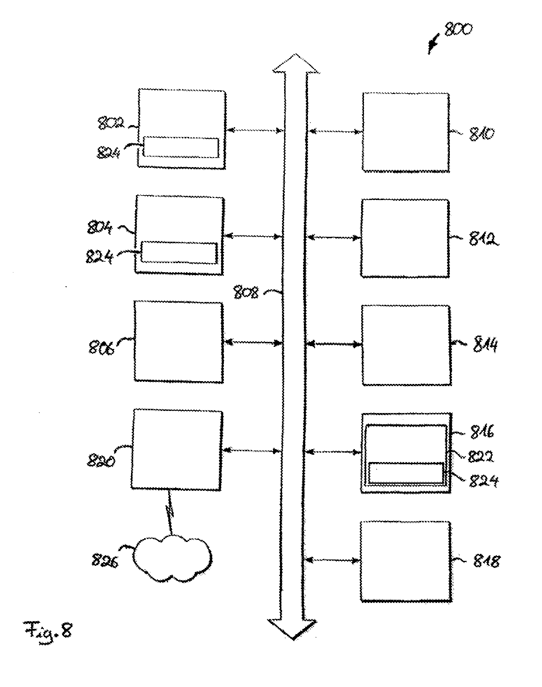

Figur 8 zeigt eine schematische Darstellung einer Maschine 800, in der ein Anweisungssatz ausgeführt werden kann, um die Maschine 800 zu veranlassen, eine oder mehrere der vorliegend beschriebenen Verfahren auszuführen. Die mobilen Kommunikationsgeräte 101, 102, 103, die Funkzugangseinheiten 210, 212, 214, 216 die Router 250, 252, 254, 256 und der Server 300 können derartige Maschinen 800 sein. In alternativen Ausführungsformen arbeitet die Maschine 800 selbständig oder kann operativ mit anderen Maschinen 800 zu einem Netzwerk verbunden sein. In einem Netzwerk kann die Maschine 800 die Funktion eines Servers oder eines Clients einer Server-Clientumgebung oder die Funktion eines Peers in einer Peer-To-Peer Netzwerkumgebung übernehmen. Die Maschine 800 kann ein Personal Computer (PC), ein Point of Sale Terminal, ein Tablet-PC, eine Set-Top-Box, ein Personal Digital Assistant (PDA), ein Mobiltelefon, ein Smartphone, eine Webanwendung, ein Netzwerkrouter, ein Switch oder eine Bridge oder jegliches Computersystem sein, das geeignet ist, einen Anweisungssatz (sequentiell oder auf andere Art und Weise) auszuführen, wobei der Anweisungssatz Handlungen beschreibt, die von der Maschine 800 durchzuführen sind. Während nur jeweils eine einzelne Maschine 800 dargestellt ist, kann der Begriff "Maschine" auch eine Ansammlung von Maschinen bezeichnen, die einzeln für sich oder zusammen Anweisungen ausführen, um eine oder mehrere der hier beschriebenen Verfahren durchzuführen.

Das beispielhafte Computersystem 800 umfasst einen Prozessor 802 (beispielsweise einen Hauptprozessor, einen Graphikprozessor oder beides), einen Hauptspeicher 804 und statischen Speicher 806, die jeweils miteinander über einen Bus 808 kommunizieren. Das Computersystem 800 kann weiterhin eine Anzeigeeinrichtung 810 (beispielsweise einen Flüssigkristallbildschirm oder einen Kathodenstrahlröhrenbildschirm) aufweisen. Das Computersystem 800 kann weiterhin aufweisen: ein alphanumerisches Eingabegerät 812 (beispielsweise eine Tastatur), eine Benutzerschnittstelle, ein Navigationsgerät 814 (beispielsweise ein Maus), eine Festplatte 516, eine Signalerzeugungsgerät (beispielsweise einen Lautsprecher) und ein Netzwerkschnittstellengerät 820.

Die Festplatte 816 umfasst ein maschinenlesbares Medium 822, auf dem ein oder mehrere Anweisungssätze und Datenstrukturen (beispielsweise Software 824) eines oder mehrere der Verfahren verkörpern, die vorliegend beschrieben werden. Die Software 824 kann sich auch gesamt oder zumindest teilweise im Hauptspeicher 804 und/oder in dem Prozessor 802 befinden, während sie durch das Computersystem 800 ausgeführt wird, wobei der Hauptspeicher 804 und der Prozessor 802 als maschinenlesbare Medien anzusehen sind.

Die Software 824 kann außerdem über ein Netzwerk 826 mit Hilfe eines Netzwerkschnittstellengeräts 820 übermittelt oder empfangen werden, wobei das Netzwerkschnittstellengerät 820 eines aus der Vielzahl von bekannten Transferprotokollen (z.B. http) verwendet und als Übertragungsmedium (z.B. ein Wellensignal) verkörpert ist.

Während das maschinenlesbare Medium 822 in der beispielhaften Ausführungsform der Figur 8 als einzelnes Medium dargestellt ist, sollte der Begriff "maschinenlesbares Medium" so verstanden werden, dass er sowohl ein einzelnes Medium als auch mehrere Medien umfasst (z.B. eine zentrale oder eine verteilte Datenbank und/oder damit assoziierte Caches und Server), die einen oder mehrere Sätze von Anweisungen speichern. Der Begriff "maschinenlesbares Medium" sollte auch so verstanden werden, dass er jegliches Medium, das geeignet ist, Datenstrukturen, die durch einen derartigen Satz von Anweisungen verwendet oder assoziiert werden, zu speichern, zu enkodieren oder zu tragen. Der Begriff "maschinenlesbares Medium" soll dementsprechende so aufgefasst werden, dass es zwar Festkörperspeicher, optische und magnetische Medien umfasst, aber nicht auf diese begrenzt ist. Beispielhafte Ausführungsformen können in digitale elektronische Schaltkreise, in Computerhardware, Firmware, Software, oder in Kombinationen von den zuvor genannten implementiert werden. Beispielhafte Ausführungsformen können als Computerprogrammprodukt, zum Beispiel als ein Computerprogramm konkret verkörpert in einem Datenträger, beispielsweise in einer maschinenlesbaren Speichereinrichtung oder in einem übertragenen Signal, zur Ausführung durch oder Steuerung der Arbeitsweise von einer Datenverarbeitungsvorrichtung, zum Beispiel einem programmierbaren Prozessor, einem Computer oder mehreren Computern sein.

Anweisungen, die ein Computerprogramm darstellen, können in jeglicher Programmiersprachenart geschrieben werden, auch in kompilierter oder interpretierter Sprache, und können in jeglicher Form angewandt werden, auch als ein alleinstehendes Programm oder als ein Modul, eine Komponente, eine Subroutine, oder jegliche andere Einheit, die geeignet ist in einer Rechnerumgebung verwendet zu werden. Ein Computerprogramm kann eingesetzt werden, um auf einem oder mehreren Computern an einem Ort oder verteilt über mehrere Orte und durch eine Kommunikationsnetzwerk verbunden ausgeführt zu werden.

In beispielhaften Ausführungsformen können Operationen durch einen oder mehrere programmierbare Prozessoren durchgeführt werden, die ein Computerprogramm ausführen, um Funktionen durch das Verarbeiten von Eingangsdaten und das Erzeugen von Ausgabedaten durchzuführen. Verfahrensoperationen können durch logische Schaltreise mit bestimmter Aufgabe durchgeführt werden. Ebenso können Vorrichtungen beispielhafter Ausführungsformen als logische Schaltreise mit bestimmter Aufgabe implementiert werden. Beispiele für logische Schaltkreise mit bestimmter Aufgabe sind ein FPGA (field programmable gate array) oder ein ASIC (applicationspecific integrated circuit).

Prozessoren, die geeignet sind ein Computerprogramm auszuführen, umfassen beispielsweise sowohl Mikroprozessoren für allgemeine als auch für bestimmte Aufgaben und sowohl einen oder mehrere Prozessoren jeglicher Art von digitalen Computern. Im Allgemeinen wird ein Prozessor Anweisungen und Daten von einem nur-lesbaren Speicher oder einem random access memory oder von beidem empfangen. Elemente eines Computers können einen Prozessor zum Ausführen von Anweisungen und eine oder mehrere Speichereinrichtungen zum Speichern von Anweisungen und Daten aufweisen. Im Allgemeinen wird ein Computer auch eine Massenspeichervorrichtung umfassen oder daran operativ gekoppelt sein, um Daten zu empfangen und/oder zu übermitteln. Beispiele für Massenspeichervorrichtungen sind magnetische, magnetooptische oder optische Platten. Datenträger, die geeignet sind Computerprogrammanweisungen und Daten verkörpern, umfassen alle Arten von nicht-flüchtigen Speichern, auch beispielsweise Halbleiterspeichervorrichtung wie EPROM, EEPROM und Flash-Speichervorrichtungen; magnetischen Platten, wie beispielsweise interne Festplatten und entfernbare Platten, magnetooptisch Platten und CD-ROMs sowie DVD-ROMs. Der Prozessor und der Speicher kann durch logische Schaltkreise mit bestimmten Aufgaben ergänzt werden.

Beispielhafte Ausführungsformen können auch in ein Rechnersystem implementiert werden, das umfasst: eine Back-End-Komponente, zum Beispiel einen Datenserver, oder eine Middleware-Komponente, zum Beispiel einen Anwendungsserver, oder eine Front-End-Komponente, zum Beispiel einen Client-Computer mit einer graphischen Benutzeroberfläche oder einem Webbrowser, durch den der Benutzer mit der Implementierung der Erfindung interagieren kann, oder jeglicher Kombination derartiger Back-End-, Middleware- oder Front-End-Komponenten. Die Komponenten des Systems können auf jegliche Art oder mittels jeglichem Medium digitaler Kommunikation, zum Beispiel einen Kommunikationsnetzwerk, verbunden sein. Beispiele von Kommunikationsnetzwerken umfasst ein local area network ("LAN"), ein wide area network ("WAN"), und das Internet.

Das Rechnersystem kann Clients und Server umfassen. Ein Client und ein Server sind im Allgemeinen voneinander entfernt und interagieren typischerweise über ein Kommunikationsnetz. Das Verhältnis zwischen Client und Server entsteht aufgrund von Computerprogrammen, die auf den entsprechenden Computern laufen und ein Client-Server-Verhältnis zueinander aufweisen.

Bestimmte Anwedungen oder Prozesse die hierin beschrieben sind weisen eine Vielzahl von Komponenten und Mechanismen auf. Eine Komponente, ein Modul oder ein Mechanismus kann eine Einheit verschiedener Funktionalität sein, die anderen Modulen Informationen bereitstellt und Informationen von anderen Modulen empfängt. Dementsprechend können die beschriebenen Module als kommunikativ miteinander gekoppelt angesehen werden. Module können auch Kommunikation mit Eingabe- und Ausgabevorrichtungen initiieren und auf einer Resource (beispielsweise eine Sammlung von Informationen) operieren. Die Module können Hardware-Schaltkreise, optische Komponenten, Einzel- oder Mehrfachprozessorschaltkreise, Speicherschaltkreise, Software-Programmmodule und Objekte, Firmware und Kombinationen des vorangegangenen umfassen, solange es für die spezifischen Implementationen verschiedener Ausführungsformen geeignet ist.

### Alternative Ausführungsformen

In einer alternativen Ausführungsform ist die Startseite nicht in der Speichereinrichtung 206 der Funkzugangseinheit 210 gespeichert. Stattdessen wird auf Inhaltsanfrage eines mobilen Kommunikationsgeräts 100 eine Startseite durch den Server 300 generiert. Diese kann dann entweder an die Funkzugangseinheit 210 geschickt werden, die sie anschließend dem mobilen Kommunikationsgerät 100 über die erste Kommunikationseinheit 202 übermittelt oder aber die generierte Startseite verbleibt auf dem Server 300 und das mobile Kommunikationsgerät 100 greift über die Funkzugangseinheit 210 und dem Router 250 direkt auf diese zu. Der Server 300 kann die Startseite basierend auf verschiedenen Parametern generieren. Beispielsweise kann er sie basierend auf der Funkzugangseinheit 210 und/oder auf Daten, die auf der Server-Speichereinrichtung 306 gespeichert sind, und/oder auf Verbindungsdaten (z.B. MAC-Adresse, Spracheinstellung, Uhrzeit etc.) generieren. Zum Beispiel kann der Server 300 abhängig von der MAC-Adresse des mobilen Kommunikationsgeräts 100 die Startseite individuell für ein mobiles Kommunikationsgerät erzeugen. Abhängig von der Funkzugangseinheit 210 mit dem das inhaltsanfrage-stellende mobile Kommunikationsgerät 100 verbunden ist, kann die Startseite individuell für die Funkzugangseinheit 210 erzeugt werden. Schließlich kann eine Startseite auch abhängig von dem mobilen Kommunikationsgerät 100 (beispielsweise MAC-Adresse, Betriebssystem) und abhängig von der Funkzugangseinheit 210 erzeugt werden.

In einer weiteren alternativen Ausführungsform ist der gesamte vorbestimmte Inhalt auf der Funkzugangseinheit 210 gespeichert. Gemäß dieser alternativen Ausführungsform sind die zweite Kommunikationseinheit 208, der Router 250 und der Server 300 nicht zwingend erforderlich ― diese könnten dann optional vorhanden oder nicht vorhanden sein.

In einer weiteren alternativen Ausführungsform weist die Funkzugangseinheit 210 eine dritte Kommunikationseinrichtung auf, die geeignet ist, die Funktion des Routers 250 zu übernehmen. Insbesondere könnte es sich bei der dritten Kommunikationseinrichtung um einen UMTS- oder GPRS-Einrichtung handeln, die die Funkzugangseinheit 210 mit dem Internet 400 verbindet. Entweder ersetzt die dritte Kommunikationseinrichtung die zweite Kommunikationseinrichtung 208 (d.h. je nach Sichtweise weist die Funkzugangseinheit 210 dann keine zweite Kommunikationseinrichtung 208 auf oder die dritte Kommunikationseinrichtung ist als zweite Kommunikationseinrichtung 208 anzusehen) oder die dritte Kommunikationseinrichtung übernimmt die Funktion der zweiten Kommunikationseinrichtung 208, wenn eine Störung vorliegt, d.h. wenn beispielsweise der Router 250 ausfällt. Bei der dritten Kommunikationseinrichtung kann es sich insbesondere um drahtlose Kommunikationseinrichtung handeln. Dies ist insbesondere dann von Vorteil, wenn kein leitungsbasierter Anschluss zu vorbestimmten Inhalten existiert.

### Anwendungsbeispiel

Als ein Anwendungsbeispiel wird hierin Bezug auf Location-based-Marketing und insbesondere auf einen AppKiosk genommen, der ein Beispiel eines erfindungsgemäßen offenen Funknetzes zum Bereitstellen vorbestimmter Inhalte 420 darstellt. Allerdings kann die beschriebene Erfindung auch in anderen Umgebungen und Anwendungen eingesetzt werden und ist nicht auf einen AppKiosk beschränkt.

Location-based-Marketing ist eine Marketingstrategie, die darauf abzielt, Kunden abhängig von Ihrem Aufenthaltsort geeignete Werbung zu unterbreiten. In seiner einfachsten Ausführungsform ist dies ein Plakat vor einem Kino, das einen in diesem Kino laufenden Kinofilm anpreist. In seiner modernsten Form sind dies Angebote und Werbung, die einem Benutzer eines Smartphones bzw. TabletPCs abhängig von seinem Standort zugeschickt werden. Allerdings muss dazu der Benutzer seine Position preisgeben. Ob der Benutzer gewillt ist, sich permanent überwachen zu lassen, ist fragwürdig.

Ein AppKiosk auf Basis einer erfindungsgemäßen Funkzugangseinheiten 210 (im Folgenden auch als offener WLAN-Hotspot 210 bezeichnet) zum Bereitstellen von vorbestimmten Inhalten löst dieses Problem. Anstatt den Benutzer dazu zu nötigen, preiszugeben, wo er sich gerade aufhält, wird der offene WLAN-Hotspot 210 an für den Werbenden und für den Benutzer interessanten Stellen aufgestellt. Dort meldet sich dann der offene WLAN-Hotspot 210, gibt also seine Position dem Benutzer bekannt, und nicht umgekehrt.

Die AppKiosk Funkzugangseinheit 210 ist ein MiniPC 210, auf welchem eine AppKiosk-Software installiert ist. Diese Software macht aus dem MiniPC 210 einen offenen WLAN-Hotspot 210, der es ermöglicht, ausschließlich auf vorbestimmte Inhalte 420 im Internet 400 zuzugreifen. In diesem Falle sind dies die Seiten des AppKiosk selbst, die auf einer Speichereinrichtung 206 des MiniPCs 210 gespeichert sind, und der entsprechende AppStore der jeweiligen Anbieter (z.B. Apple, Google, Nokia, etc.), die Bestandteil des Internets 400 sind. Vorzugsweise muss sich der Benutzer weder an einem AppKiosk identifizieren noch einloggen noch persönliche Daten angeben. Wenn ein Kauf einer App via AppKiosk stattfindet, wird dieser direkt im entsprechenden AppStore des Anbieters getätigt. Der AppKiosk ist damit eine rein technische Verbindungsplattform und hat mit der Abwicklung des Kaufprozesses direkt nichts zu tun.

Der AppKiosk kann als ein lokales "Werbeplakat" angesehen werden, das auf allen Smartphones 100 im Empfangsbereich des offenen WLAN-Hotspots (auch Zelle 110 genannt) angezeigt werden kann. Gleichzeitig kann der MiniPC 210 selbst standardmäßig mit einem Flüssigkeitskristallbildschirm ausgerüstet werden, das den vorbestimmten Inhalt des AppKiosks anzeigt.

Da jeder einzelne AppKiosk via Internet 400 gesteuert und kontrolliert wird, könnte auf jedem mit einem AppKiosk WLAN-Hotspot verbundenen Smartphone zu jeder Zeit exakt das angezeigt werden, was die Nutzer am meisten anspricht (MAC-Adressen individualisiert und/oder Funkzugangseinheit 210 individualisiert).

Im Grunde genommen kann man sagen, dass der AppKiosk das Plakat auf das Smartphone bringt ― und zwar beim "Vorbeilaufen" am "Plakat". Ein Beispiel: Der Betreiber eines Bücherladens in der Innenstadt will das vorbeilaufende Publikum auf eine Neuerscheinung, ein aktuelles Angebot oder auf seine eigene App aufmerksam machen. Anstelle von üblichen POS-Maßnahmen wie Plakate, Promotion-Teams oder ähnlichem, investiert der Buchhändler wenig Geld im Monat für den Betrieb seines AppKiosk. Es genügt, den AppKiosk Mini-PC 210 an die Stromversorgung und über ein Ethernet Kabel an den vorhandenen DSL-Router 250 anzustecken. Und schon werden alle Passanten, welche über ein Smartphone 100 mit (üblicherweise) eingeschalteter WLAN-Erkennung verfügen, automatisch über den "AppKiosk Buchhandlung Meier - kostenlos" informiert. Der AppKiosk Mini-PC 210 lässt sich sehr einfach um einen Bildschirm erweitern, falls Point-of-Sale Terminals gewünscht sind.

Als ein weiteres Anwendungsbeispiel wird hierin Bezug auf eine kindersichere Funkzugangseinheit 210 genommen, die ein Beispiel eines erfindungsgemäßen offenen Funknetzes zum Bereitstellen vorbestimmter Inhalte 420 darstellt. Allerdings kann die beschriebene Erfindung auch in anderen Umgebungen und Anwendungen eingesetzt werden und ist nicht auf eine kindersichere Funkzugangseinheit 210 beschränkt.

Bei kindersicheren Funkzugangseinheiten 210 werden die Funkzugangseinheiten 210 an beliebigen Orten, wie z.B. in der privaten Wohnung oder in der Schule aufgestellt. Die kindersicheren Funkzugangseinheiten 210 gewähren explizit nur den Zugang zu vorbestimmten Inhalten ― also beispielsweise Lexika oder Unterhaltung, die für Kinder geeignet ist.

## Patentansprüche

1. Eine Vorrichtung (210) zum Bereitstellen eines vorbestimmten Inhalts über ein offenes Funknetz, aufweisend:
eine erste Kommunikationseinrichtung (202) zum Herstellen einer drahtlosen Verbindung mit einem mobilen Kommunikationsgerät (100);
eine zweite Kommunikationseinrichtung (208) zum Herstellen einer Verbindung mit einem Zielnetz (400);
eine Speichereinrichtung (206) zum Speichern von vorbestimmten Zugangsverweisen; und
eine Filtereinheit (232);
**dadurch gekennzeichnet, dass**
die Filtereinheit (232) geeignet ist:
zum Vergleichen eines Zugangsverweises einer Inhaltsanfrage eines mobilen Kommunikationsgeräts (100) mit den vorbestimmten Zugangsverweisen;
zum Erlauben und Weiterleiten der Inhaltsanfrage; und
zum Zurückweisen der Inhaltsanfrage,
wobei die Filtereinheit (232) die Inhaltsanfrage erlaubt und weiterleitet, wenn der Zugangsverweis mit einem der vorbestimmten Zugangsverweise übereinstimmt, und wobei die Filtereinheit (232) die Inhaltsanfrage zurückweist, wenn der Zugangsverweis nicht mit einem der vorbestimmten Zugangsverweise übereinstimmt.

2. Die Vorrichtung (210) nach Anspruch 1,
wobei die zweite Kommunikationseinrichtung (208) zum Herstellen einer Verbindung mit dem Zielnetz (400) über einen Router (250) geeignet ist, und/oder
wobei die zweite Kommunikationseinrichtung (208) eine Netzwerkkarte (208) und/oder eine WLAN-Karte (208) und/oder eine UMTS- und/oder GPRS-Einrichtung (208) ist.

3. Die Vorrichtung (210) nach einem der vorangegangenen Ansprüche,
wobei die Vorrichtung (210) weiterhin eine dritte Kommunikationseinrichtung aufweist,
wobei die dritte Kommunikationseinrichtung zum Herstellen einer Verbindung mit dem Zielnetz (400) geeignet ist, und
wobei die dritte Kommunikationseinrichtung insbesondere eine UMTS- und/oder GPRS-Einrichtung ist.

4. Die Vorrichtung nach einem der vorangegangenen Ansprüche, wobei die Vorrichtung (210) weiterhin eine Protokolleinheit (230) aufweist, wobei die Protokolleinheit (230) geeignet ist:
zum Protokollieren von Verbindungsinformationen bezüglich der drahtlosen Verbindung, wobei die Verbindungsinformationen insbesondere mindestens eine der folgenden Informationen aufweist: die MAC-Adresse, das Betriebssystems, der Gerätetyp und die Spracheinstellung des verbundenen mobilen Kommunikationsgeräts (100), sowie den Verbindungszeitpunkt, die Verbindungsdauer und die während der Verbindung übertragenen Datenmenge; und/oder
zum Protokollieren von Zugriffsinformationen bezüglich der Inhaltsanfrage, wobei die Zugriffsinformationen insbesondere mindestens eine der folgenden Informationen aufweist: die MAC-Adresse, das Betriebssystem, der Gerätetyp und die Spracheinstellung des inhaltsanfrage-stellenden mobilen Kommunikationsgeräts (100), sowie der Zugangsverweis, der Zeitpunkt und die Dauer der Inhaltsanfrage, sowie die als Resultat der Inhaltsanfrage übertragenen Daten und/oder Datenmenge.

5. Die Vorrichtung (210) nach einem der vorangegangenen Ansprüche,
wobei die zweite Kommunikationseinrichtung (208) zum Empfangen eines Datenstroms, der durch eine erlaubte Inhaltsanfrage erzeugt wurde, geeignet ist,
wobei die Vorrichtung (210) weiterhin eine Protokolleinheit (230) mit einer Mustererkennung zur Erkennung eines vorbestimmten Musters in dem Datenstrom aufweist, und
wobei die Protokolleinheit (230) zum Protokollieren von Musterinformationen bezüglicher der Inhaltsanfrage geeignet ist, wobei die Musterinformationen anzeigt, ob in dem Datenstrom ein vorbestimmtes Muster vorliegt.

6. Die Vorrichtung (210) nach einem der vorangegangenen Ansprüche,
wobei Verbindungsinformationen und/oder Zugriffsinformationen und/oder Musterinformationen Protokollinformationen sind, und
wobei zumindest ein Teil der Protokollinformationen oder alle Protokollinformationen oder keine Protokollinformationen auf der Speichereinrichtung (206) gespeichert werden.

7. Die Vorrichtung (210) nach einem der vorangegangenen Ansprüche,
wobei die zweite Kommunikationseinrichtung (208) weiterhin zum Empfangen einer eingehenden Nachricht aus dem Zielnetz (400) geeignet ist,
wobei die Vorrichtung (210) weiterhin eine Nachrichtenauswerteeinheit (236) aufweist, wobei die Nachrichtenauswerteeinheit (236) geeignet ist:
zum Identifizieren des Typs der empfangenen eingehenden Nachricht,
zum Ausführen einer Operation abhängig von dem identifizierten Typ der empfangenen eingehenden Nachricht.

8. Die Vorrichtung (210) nach einem der vorangegangenen Ansprüche,
wobei die zweite Kommunikationseinrichtung (208) zum Empfangen einer eingehenden Nachricht aus dem Zielnetz (400) geeignet ist,
wobei die Vorrichtung (210) weiterhin aufweist:
eine Nachrichtenauswerteeinheit (236) zum Ausführen einer Aktualisierung der in der Speichereinheit (206) gespeicherten unbestimmten Zugangsverweise basierend auf der eingehenden Nachricht.

9. Die Vorrichtung (210) nach einem der vorangegangenen Ansprüche,
wobei die zweite Kommunikationseinrichtung (208) zum Senden einer ausgehenden Nachricht in das Zielnetz (400) geeignet ist,
wobei die Vorrichtung (210) eine Protokollsendeeinheit (234) aufweist, die zum Verschicken von Protokollinformationen über die zweite Kommunikationseinrichtung (208) als eine oder mehrere ausgehende Nachrichten geeignet ist,
wobei die Protokollsendeeinheit (234) insbesondere zum intervallartigen Verschicken von Protokollinformationen über die zweite Kommunikationseinrichtung (208) als eine oder mehrere ausgehende Nachrichten geeignet ist.

10. Ein System, aufweisend:
mindestens eine Vorrichtung (210) nach einem der vorangegangenen Ansprüche; und
einen Server (300), der über ein Zielnetz (400) mit den Vorrichtungen (210) verbunden ist,
wobei die zweite Kommunikationseinrichtung (208) der mindestens einen Vorrichtungen (210) zum Senden einer ausgehenden Nachricht an den Server (300) und zum Empfangen einer eingehenden Nachricht von dem Server (300) geeignet ist.

11. Das System nach Anspruch 10, wobei der Server (300) aufweist:
eine Server-Kommunikationseinrichtung (302) zum Empfangen der ausgehenden Nachricht und Senden der eingehenden Nachricht; und
eine Server-Speichereinrichtung (306) zum Speichern der empfangenen ausgehenden Nachricht, insbesondere zum Speichern der in den empfangenen ausgehenden Nachricht enthaltenen Protokollinformationen.

12. Das System nach Anspruch 11, wobei der Server (300) weiterhin aufweist:
eine Server-Auswerteinheit (318) zum Auswerten der in der Server-Speichereinrichtung (306) gespeicherten Protokollinformationen, zum Erzeugen der eingehenden Nachricht, insbesondere einer Aktualisierungsnachricht oder einer Anweisungsnachricht, basierend auf der Auswertung der Protokollinformationen und zum Versenden der erzeugten eingehenden Nachrichten an eine, mehrere oder alle Vorrichtungen (210).

13. Das System nach einem der Ansprüche 11 bis 12, wobei der Server (300) weiterhin aufweist:
eine Server-Benutzereinheit (318) zum Erzeugen der eingehenden Nachricht, insbesondere einer Aktualisierungsnachricht oder einer Anweisungsnachrichten, basierend auf Eingaben eines Benutzers und zum Versenden der erzeugten eingehenden Nachricht an eine, mehrere oder alle Vorrichtungen (210).

14. Ein Verfahren zum Protokollieren und zum Filtern von Inhaltsanfragen, das die folgenden Schritte aufweist:
das Empfangen einer Inhaltsanfrage durch eine erste Kommunikationseinheit (202) einer Funkzugangseinheit (210);
das Protokollieren der Inhaltsanfrage durch eine Protokolleinheit (230) der Funkzugangseinheit (210);
das Filtern der Inhaltsanfrage durch eine Filtereinheit (232) der Funkzugangseinheit (210), wobei Inhaltsanfragen mit einem Zugangsverweis, der mit einem der vorbestimmten Zugangsverweise übereinstimmt, erlaubt und weitergeleitet werden und Inhaltsanfragen mit einem Zugangsverweis, der nicht mit einem der vorbestimmten Zugangsverweise übereinstimmt, zurückgewiesen werden.

15. Ein Verfahren zum Auswerten einer eingehenden Nachricht, das die folgenden Schritte aufweist:
das Empfangen der eingehenden Nachricht durch eine zweite Kommunikationseinrichtung (208) einer Funkzugangseinheit (210);
Ermitteln des Typs der eingehenden Nachricht durch eine Nachrichtenauswerteeinheit (236) der Funkzugangseinheit (210);
Ausführen einer Operation, die vom Typ der eingehenden Nachricht abhängig ist, wobei insbesondere bei einer Aktualisierungsnachricht die Operation das Aktualisieren der Speichereinrichtung (206) ist, und wobei insbesondere bei einer Anweisungsnachricht die Operation das Ausführen einer Anweisung oder eines Satzes von Anweisungen ist.

16. Verfahren zur drahtlosen Übertragung von vorbestimmten Inhalten von einer Funkzugangseinheit (210) auf ein mobiles Kommunikationsgerät (100), wobei das Verfahren die Schritte aufweist:
Verbinden des mobilen Kommunikationsgeräts (100) mit der Funkzugangseinheit (210);
Übertragen einer Startseite, die mindestens einen Zugangsverweis auf vorbestimmte Inhalte (420) in einem Zielnetz (400) aufweist, von der Funkzugangseinheit (210) auf das mobile Kommunikationsgerät (100);
Darstellen der Startseite auf dem mobilen Kommunikationsgerät (100);
Auswählen eines Zugangsverweises der Startseite;
Übertragen des ausgewählten Zugangsverweises von dem mobilen Kommunikationsgerät (210) zu der Funkzugangseinheit (210);
Laden der Inhalte, auf die der ausgewählte Zugangsverweis verweist, aus dem Zielnetz (400); und
Übertragen der Inhalte, auf die der ausgewählte Zugangsverweis verweist, von der Funkzugangseinheit (210) auf das mobile Kommunikationsgerät (100).
